# FASCICULE DE BREVET EUROPEEN

(11) **EP 1 880 176 B1**
(45) Date de publication et mention de la délivrance du brevet: **17.02.2010**
(21) Numéro de dépôt: 06743835.8
(22) Date de dépôt: 24.04.2006
(51) Int. Cl.: G01J 5/20

(54) **DETECTEUR THERMIQUE DE RAYONNEMENTS ELECTROMAGNETIQUES ET DISPOSITIF DE DETECTION INFRAROUGE METTANT EN OEUVRE DE TELS DETECTEURS**
THERMISCHER DETEKTOR FÜR ELEKTROMAGNETISCHE STRAHLUNG IN EINER DIE DETEKTOREN VERWENDENDEN INFRAROT-DETEKTIONSEINRICHTUNG
THERMAL DETECTOR FOR ELECTROMAGNETIC RADIATION AND INFRARED DETECTION DEVICE USING SAID DETECTORS

(30) Priorité: 12.05.2005 FR 0551245; 12.05.2005 FR 0551244
(43) Date de publication de la demande: 23.01.2008
(73) Titulaire: Commissariat à l'Energie Atomique, Bâtiment "Le Ponant D" 25 rue Leblanc 75015 Paris (FR)
(72) Inventeur: OUVRIER-BUFFET, Jean-Louis, F-74320 Sevrier (FR); BISOTTO, Sylvette, F-38000 Grenoble (FR); ARNAUD, Agnès, F-38420 Saint Jean le Vieux (FR); PEREZ, André, F-38710 Cordeac (FR)
(74) Mandataire: Vuillermoz, Bruno
(86) Numéro de dépôt international: PCT/FR2006/050378
(87) Numéro de publication internationale: WO 2006/120362

(56) Documents cités:
- WO-A-00/37906
- US-A- 5 912 464

## Description

### DOMAINE TECHNIQUE

La présente invention concerne un détecteur thermique, notamment bolométrique, ainsi qu'un dispositif de détection infrarouge mettant en oeuvre de tels détecteurs.

L'invention trouve notamment son domaine d'application dans l'imagerie infrarouge.

### ETAT ANTERIEUR DE LA TECHNIQUE

Par définition, un détecteur thermique permet de mesurer la quantité d'un flux énergétique incident, et par exemple, la puissance d'un rayonnement électromagnétique dans le domaine des rayons infrarouges.

Concernant les détecteurs infrarouges, il est connu des dispositifs agencés sous forme matricielle, susceptibles de fonctionner à la température ambiante, c'est à dire ne nécessitant pas de refroidissement, contrairement aux dispositifs de détection appelés détecteurs « quantiques », qui eux nécessitent un fonctionnement à très basse température, typiquement celle de l'azote liquide.

Ces détecteurs comportent généralement un élément sensible pouvant être chauffé par un rayonnement infrarouge, caractéristique de la température et de l'émissivité des corps observés. L'augmentation de température de l'élément sensible engendre une variation d'une propriété électrique du matériau sensible : apparition de charges électriques par effet pyroélectrique, variation de capacité par changement de la constante électrique ou, plus traditionnellement, variation de la résistance d'un matériau semi-conducteur ou métallique.

Dans ce dernier cas de figure, on parle de détecteur bolométrique, de type résistif. Le rayonnement incident absorbé provoque une augmentation de la température du détecteur, qui induit une variation de la résistance électrique. Ces variations de résistance engendrent des variations de tension ou de courant aux bornes du détecteur, qui constituent le signal délivré par le capteur.

Un tel détecteur non refroidi associe généralement :
- des moyens d'absorption du rayonnement infrarouge et de conversion de ce dernier en chaleur ;
- des moyens d'isolation thermique du détecteur, de telle sorte à permettre à celui-ci de s'échauffer sous l'action du rayonnement infrarouge ;
- des moyens de thermométrie qui, traditionnellement, mettent en oeuvre un élément résistif ;
- des moyens de lecture des signaux électriques fournis par les moyens de thermométrie.

Les détecteurs destinés à l'imagerie infrarouge sont réalisés sous la forme d'une matrice de détecteurs élémentaires selon une ou deux dimensions, sur un substrat, généralement réalisé en silicium, qui comporte des moyens d'excitation électrique (stimuli) desdits détecteurs élémentaires, et des moyens de pré-traitement des signaux électriques générés par ces détecteurs élémentaires.

Ces moyens d'excitation électrique et de pré-traitement sont formés sur le substrat et constituent un circuit de lecture.

En pratique, des imageurs infrarouges monolithiques fonctionnant à température ambiante sont fabriqués en connectant directement une matrice d'éléments sensibles à un circuit de multiplexage en silicium de type CMOS ou CDD.

Un dispositif comportant une matrice de détecteurs élémentaires et un circuit de lecture associé est généralement placé dans un boîtier et relié, notamment électriquement, au milieu extérieur par des techniques classiques (fils métalliques et broches de montage). Dans un tel boîtier, la pression est réduite afin de limiter les pertes thermiques. Ainsi, le détecteur thermique peut être encapsulé sous vide ou sous un gaz peu conducteur de la chaleur pour gagner en performance. Le boîtier est en outre muni d'une fenêtre transparente aux rayonnements à détecter.

Pour observer une scène par l'intermédiaire de ce détecteur, on projette la scène à travers une optique adaptée sur la matrice de détecteurs élémentaires, et des stimuli électriques cadencés sont appliqués, par l'intermédiaire du circuit de lecture (également prévu à cet effet), à chacun des détecteurs élémentaires, ou à chaque rangée de tels détecteurs, afin d'obtenir un signal électrique constituant l'image de la température atteinte par chaque détecteur élémentaire.

Ce signal est traité de manière plus ou moins élaborée par le circuit de lecture, puis éventuellement par un dispositif électronique extérieur au boîtier, afin de générer une image thermique de la scène observée.

Les performances des détecteurs bolométriques non refroidis dépendent beaucoup de la maîtrise d'élaboration et d'intégration des matériaux bolométriques les plus performants au sein de structures très légères constituées par des micro-ponts bolométriques isolés thermiquement du circuit de lecture, afin d'en tirer le meilleur parti en terme de rapport signal/bruit.

Un fonctionnement performant de ces détecteurs implique, en particulier au niveau du matériau sensible, une bonne isolation thermique de la couche active vis-à-vis de son support, ainsi qu'une forte sensibilité dudit matériau de l'effet de conversion de l'échauffement en signal électrique. Les deux premières conditions sont satisfaites par une mise en oeuvre en couche mince.

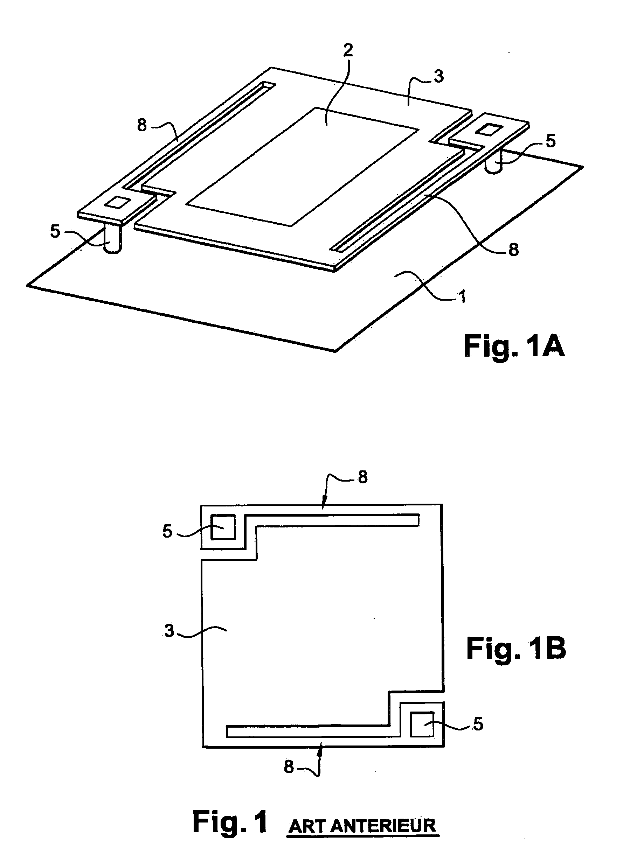

L'art antérieur décrit diverses manières de disposer les divers éléments constitutifs des détecteurs élémentaires. Cependant, un agencement classique est représenté sur la figure 1, en rapport avec un bolomètre.

Schématiquement, ce type de détecteur est construit sous forme d'une membrane suspendue au-dessus du substrat (1) faisant fonction de support, et fixée à ce substrat par l'intermédiaire de points d'ancrage (5) appelés « piliers », conducteurs de l'électricité. Cette membrane comporte une couche mince (typiquement entre 0,1 et 1 µm) de matériau bolométrique sensible à la température (2), de deux électrodes coplanaires ou parallèles (non représentées) et d'un absorbeur (3).

Par absorbeur, on désigne une ou plusieurs couches ou arrangements de couches, dont la fonction est de capter le rayonnement électromagnétique, de le convertir en chaleur et de transmettre sa température à la couche mince (2) qui joue le rôle de thermomètre.

Selon l'état antérieur de la technique, différents thermomètres (2) sont envisagés, parmi lesquels le thermistor est une option largement répandue. En particulier, de nombreux documents et publications décrivent différentes structures bolométriques à partir d'un matériau semi-conducteur.

Le matériau sensible peut ainsi être réalisé en silicium polycristallin ou amorphe, de type p ou n, faiblement ou fortement résistif. Il peut également être réalisé en un oxyde de vanadium (VOₓ) élaboré dans une phase semi-conductrice.

Généralement, le matériau sensible repose sur un support isolant (SiO₂, SiO, SiN, ...) qui assure la rigidité mécanique de la structure bolométrique. Il peut aussi être totalement encapsulé avec l'un de ces matériaux isolants.

Le substrat support (1) est typiquement constitué d'un circuit électronique intégré sur une plaquette de silicium comprenant, d'une part des dispositifs de stimuli et de lecture du thermomètre, et d'autre part, les composants de multiplexage qui permettent de sérialiser les signaux issus des différents thermomètres et de les transmettre vers un nombre réduit de sorties afin d'être exploités par un système d'imagerie usuel. Ce circuit peut être positionné sous le détecteur, ou au contraire, être déporté plus loin sur le substrat. Ce circuit peut aussi se résumer à un réseau d'interconnexion, qui a pour fonction de relier les sorties électriques du détecteur à un circuit de traitement des informations, situé ailleurs.

L'interconnexion électrique entre le thermomètre (2) et les éléments de lecture disposés sur le substrat (1) est assurée par une couche, généralement métallique, qui est disposée sur les dispositifs d'isolation thermique décrits ci-dessous.

La sensibilité du détecteur thermique est notoirement améliorée en introduisant des « bras » d'isolement (8), entre le substrat support (1) et la membrane (3), destinés à limiter les pertes thermiques de cette dernière et donc à préserver son échauffement. Ces structures planes, allongées et très étroites, sont constituées de couches les plus minces possible et doivent être conductrices électriquement mais résistantes thermiquement.

Dans ce type de dispositif, le circuit de lecture applique donc, via les piliers (5) et les bras (8), et via au moins deux parties conductrices ou électrodes (non représentées), un courant électrique qui traverse la structure parallèlement au plan du détecteur bolométrique. Ce courant circule alors à travers le matériau bolométrique (2), dont la résistivité varie avec la température.

Selon le mode de réalisation décrit, les dispositifs d'isolation sont situés dans le même plan que la couche de matériau bolométrique, ou bien sont réalisés en dessous de celle-ci.

Réalisé dans le plan de la planche bolométrique, ce système de bras est pénalisant au niveau du facteur de remplissage du point ou détecteur élémentaire. L'expérience démontre qu'il n'est pas possible d'accroître de manière importante la longueur des bras (8), ni de réduire leur largeur et/ou leur épaisseur sans affecter la rigidité de la structure. En effet, ces éléments constituent un point de faiblesse mécanique affectant la stabilité des micro-ponts qui peuvent alors basculer ou se déformer, et donc entrer en contact avec le substrat, limitant ainsi l'isolation thermique, et corollairement réduisant de manière importante les performances du détecteur.

Par ailleurs, l'une des couches qui constituent ces dispositifs d'isolation thermique est généralement une couche conductrice de l'électricité, ayant pour fonction d'assurer la connexion électrique entre le détecteur et le circuit de lecture. Il en résulte qu'une réduction de la largeur et/ou de l'épaisseur de ces éléments conduit à un accroissement de la résistance électrique d'accès du détecteur, qui, si elle est trop élevée, nuit à une polarisation optimale du détecteur.

En outre, les matériaux utilisés pour réaliser cette couche électriquement conductrice sont également de bons conducteurs thermiques. La présence de cette couche dans les dispositifs d'isolation thermique peut donc conduire à une dégradation significative de leur isolation thermique, et corollairement aux performances du détecteur.

Le problème technique que se propose de résoudre la présente invention est donc d'offrir un agencement alternatif des détecteurs thermiques, en particulier des bolomètres, apte à assurer une connexion électrique satisfaisante tout en améliorant l'isolation thermique du matériau bolométrique.

### EXPOSE DE L'INVENTION

Selon l'invention, le détecteur thermique comprend :
- un matériau sensible, dont une propriété électrique varie avec la température ;
- un absorbeur du rayonnement électromagnétique, en contact avec ledit matériau sensible ;
- un substrat assurant la fonction de support du détecteur ; et
- des éléments conducteurs de l'électricité assurant la continuité électrique entre le matériau sensible et le substrat.

Le détecteur thermique conforme à l'invention telle que définie par la revendication 1 se caractérise en ce que le matériau sensible se présente sous la forme d'une tranche s'étendant en tout ou en partie selon une direction sensiblement perpendiculaire au plan dans lequel s'inscrit le substrat, en ce que ledit matériau est maintenu suspendu par l'absorbeur au-dessus du substrat, ledit absorbeur étant solidarisé au matériau sensible au niveau de la zone supérieure de la tranche, et en ce que l'absorbeur est lui-même suspendu par un moyen de fixation, relié mécaniquement audit substrat.

Avantageusement, le moyen de fixation est conducteur électrique et par conséquent est relié mécaniquement et électriquement au substrat.

Ainsi, la solution proposée n'est plus basée sur l'optimisation des éléments dimensionnels des bras, mais sur la disposition particulière du matériau sensible : celui-ci est placé, non plus parallèlement à la surface du support, mais perpendiculairement.

Il en résulte que le courant électrique dans le matériau bolométrique circule uniquement perpendiculairement à la surface du support. De la sorte, la quasi-totalité de la surface est libérée, permettant d'optimiser l'absorption optique et l'isolation thermique. De surcroît, cette configuration, bien adaptée à la réduction du pas, permet de réaliser les bras d'isolation thermique selon deux niveaux différents, donnant ainsi un degré de liberté supplémentaire pour agencer le détecteur. Le facteur de remplissage ainsi obtenu est optimum du point de vue de l'absorption du rayonnement infrarouge. Cette approche est également très favorable en termes de masse thermique, puisque la totalité du matériau thermomètre est active, grâce au contact réalisé sur la tranche de ce dernier. Au surplus, le matériau thermométrique est absent de la quasi-totalité de la surface de la cavité, qui est alors vraiment du type Fabry-Perrot, et peut être accordée strictement au quart de la longueur d'onde à détecter, favorisant de manière connue les performances de la détection.

Avec un tel agencement, il est donc possible d'améliorer les propriétés d'isolation thermique du bolomètre, sans dégrader la stabilité des microponts. De surcroît, la solution proposée conduit à un facteur de remplissage optimum.

Sont plus particulièrement concernés par l'invention les détecteurs thermiques de type bolomètre, dont le matériau sensible présente une résistivité qui varie avec la température. De tels matériaux bolométriques sont préférentiellement des matériaux semi-conducteurs choisis dans le groupe suivant : le silicium polycristallin ou amorphe de type p ou n, le germanium polycristallin ou amorphe de type p ou n, leurs alliages, les oxydes de vanadium et les ferrites.

Selon un mode de réalisation privilégié, l'absorbeur se présente sous la forme d'une couche, préférentiellement mince, située dans un plan sensiblement parallèle à celui du substrat.

En raison des contraintes mentionnées ci-dessus, le matériau sensible est préférentiellement formé d'une seule couche mince, agencée de manière à présenter une surface cylindrique continue ou discontinue, dont la base est avantageusement carrée, rectangulaire, cylindrique ou hexagonale.

De manière connue, pour améliorer les performances du dispositif, celui-ci comprend une couche réfléchissante vis-à-vis des rayonnements électromagnétiques et conductrice électriquement située dans un plan sensiblement parallèle à l'absorbeur.

Selon un premier mode de réalisation, la continuité électrique entre le matériau sensible, en contact avec des électrodes inférieures, et le substrat, ou la couche métallique si elle est présente, est assurée au moyen de connexions mécaniques ou électriques.

Dans ce cas de figure et en pratique, le moyen de fixation de l'absorbeur au dessus du substrat, jouant un rôle mécanique et conducteur électrique, est constitué d'un pilier conducteur électrique disposé perpendiculairement par rapport au plan dans lequel s'inscrit le substrat, dont la tête est en continuité électrique avec l'absorbeur.

Alternativement et selon un second mode de réalisation, une partie des éléments conducteurs est directement solidarisée au matériau sensible, ces éléments conducteurs particuliers étant couplés par voie capacitive à d'autres éléments conducteurs directement solidarisés au substrat.

Ainsi, cette solution consiste à supprimer la continuité physique du conducteur électrique dans les organes de maintien et d'isolation thermique du matériau thermique, notamment bolométrique, et à réaliser la connexion électrique entre le détecteur et le circuit de lecture par l'intermédiaire d'une liaison de type capacitive.

Avec un tel dispositif, les pertes thermiques par conduction engendrées par le conducteur électrique sont totalement supprimées. Dans le même temps, la stabilité des micro-ponts et le facteur de remplissage du détecteur ne sont pas affectés alors que sa polarisation est favorisée.

Au niveau du principe, il est donc nécessaire d'avoir en regard un élément conducteur supérieur en contact avec le matériau sensible et un élément conducteur inférieur en contact avec le substrat, ces deux éléments conducteurs constituant un condensateur, permettant la transmission électrique entre le circuit de lecture et la zone active de détection, de résistance variable dans le cas du bolomètre. Selon les différents modes de réalisation, cette fonction d'électrode supérieure ou inférieure, dite d' « armature », peut être remplie par des éléments distincts du dispositif. Ces éléments conducteurs peuvent également être impliqués dans le maintien de la structure.

En pratique, le couplage capacitif est assuré entre des éléments conducteurs solidarisés au matériau sensible au niveau de la zone inférieure de la tranche et des éléments conducteurs se présentant sous la forme d'une couche métallique, réfléchissante vis-à-vis des rayonnements électromagnétiques et conductrice de l'électricité revêtant le substrat.

Deux modes de réalisation sont compatibles, lorsque la connexion électrique est assurée par liaison capacitive. Le moyen de fixation permettant de suspendre l'absorbeur au-dessus du substrat peut être électriquement conducteur, relié mécaniquement et électriquement au substrat. Alternativement, ce moyen de fixation peut être électriquement isolant et relié uniquement mécaniquement au substrat. Dans les deux cas, le moyen de fixation de l'absorbeur au dessus du substrat est avantageusement constitué d'un pilier disposé perpendiculairement par rapport au plan dans lequel s'inscrit le substrat, dont la tête est en continuité avec l'absorbeur.

Dans un mode de réalisation particulier et quelle que soit la nature de la connexion électrique, le détecteur selon l'invention est constitué par une jonction p/n ou n/p.

En relation avec le procédé de fabrication d'un détecteur thermique selon l'invention, un contre-masque métallique, de surface égale à celle de la tête du pilier, est inséré entre la tête dudit pilier et l'absorbeur.

Un ou plusieurs détecteurs thermiques selon l'invention sont mis en oeuvre dans un dispositif de détection infrarouge de type bolométrique, qui présente préférentiellement une architecture matricielle.

En outre, un tel dispositif comprend avantageusement un détecteur thermique de référence ou de compensation, également appelé résistance d'ébasage en relation avec les bolomètres. Celui-ci, par ailleurs en tout point semblable au détecteur thermique actif, est dépourvu de la capacité à détecter les rayonnements électromagnétiques. En pratique, ceci est assuré par l'utilisation, comme moyen de fixation, d'un pilier métallique dont la tête recouvre entièrement la surface de l'absorbeur, empêchant ainsi toute détection du rayonnement électromagnétique et assurant de plus un couplage thermique efficace avec le substrat.

### BREVE DESCRIPTION DES FIGURES

La manière dont l'invention peut être réalisée et les avantages qui en découlent, ressortiront mieux des exemples de réalisation qui suivent, donnés à titre indicatif et non limitatif à l'appui des figures annexées.
La figure 1 est comme déjà dit, une illustration en perspective (Fig. 1A) ou en plan (Fig. 1B) d'un détecteur élémentaire de rayonnements électromagnétiques, fondé sur le principe de la détection thermique, selon l'art antérieur.
La figure 2 est une représentation schématique en plan d'un détecteur actif conforme à la présente invention selon deux modes de réalisation (Fig. 2A et Fig. 2B), dont la figure 3 est une vue en section selon la ligne A - A des figures 2A et 2B.
La figure 4 représente schématiquement le principe de lecture en courant du bolomètre.
La figure 5 représente schématiquement une vue en section de la résistance d'ébasage.
La figure 6 représente schématiquement les différentes étapes dans la fabrication simultanée d'un bolomètre et d'une résistance d'ébasage.
La figure 7 représente une vue schématique en section d'un bolomètre à thermomètre vertical, dépourvu de connexion entre le substrat et les électrodes inférieures.
La figure 8 est une vue analogue à la figure 7 illustrant une variante du mode de réalisation par liaison capacitive.
La figure 9 est une représentation schématique en section d'un détecteur thermique à jonction p/n ou n/p verticale.

### EXPOSE DETAILLE DE L'INVENTION

L'invention concerne donc tout d'abord un détecteur thermique élémentaire, et plus particulièrement la disposition du matériau sensible de ce détecteur, faisant sa spécificité par rapport à un bolomètre de l'art antérieur, tel qu'illustré à la figure 1.

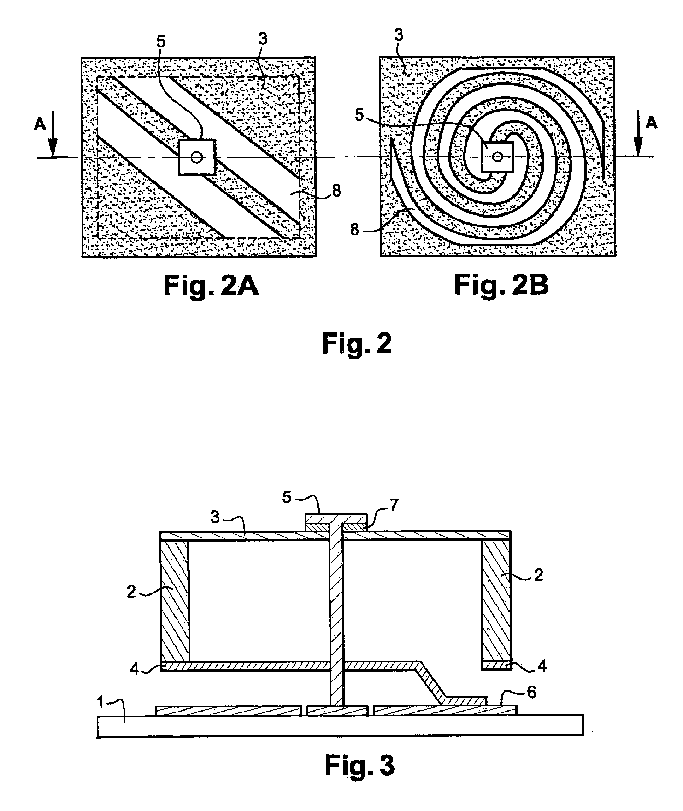

Un détecteur actif mettant en oeuvre un bolomètre de type résistif selon l'invention est décrit plus en détail en relation avec les figures 2 et 3.

Un tel bolomètre est réalisé sur un substrat (1) intégrant un circuit de lecture intégré. Sur celui-ci, est élaborée une couche métallique (6), qui sert à la fois de réflecteur du rayonnement infrarouge incident, et de connexion électrique du bolomètre.

Sur cette couche métallique (6) mise en place selon des procédés photolithographiques usuels, une première couche sacrificielle de 0,2 µm à 0,5 µm sert temporairement de support au film conducteur (4) (de très faible épaisseur afin de limiter les fuites thermiques) qui une fois défini, assure le contact inférieur ou électrode inférieure du thermomètre. Une seconde couche sacrificielle de 2 µm à 2,3 µm permet la construction de la structure bolométrique (2), en particulier l'élaboration du thermomètre dans son épaisseur par l'intermédiaire d'une tranchée qui débouche sur le matériau conducteur inférieur (4). Après son dépôt, le matériau thermométrique (2) doit être retiré de la surface parallèle au substrat (1), par exemple par polissage mécano-chimique.

A l'issue de cette opération, l'élaboration d'un pilier central (5), destiné à faire fonction de support mécanique du matériau bolométrique (2) au dessus du substrat, doit être entreprise. Elle débute par le dépôt d'une couche d'un matériau absorbeur (3) et du contre-masque (7).

L'absorption des photons ou des radiations électromagnétiques nécessite un absorbeur (3). Celui-ci se présente sous la forme d'une couche métallique. Celle-ci permet d'adapter l'impédance entre le vide et la cavité, formée par cette couche métallique (3) et le réflecteur (6), distant du quart ou sensiblement du quart de la longueur d'onde à détecter. Il s'agit généralement d'une couche mince (30 à 100 Å) de nitrure de titane par exemple.

Le contre-masque (7) permet la réalisation de la gravure de la couche sacrificielle en vue de l'élaboration du pilier central (5), puis la séparation des détecteurs (en particulier la gravure du matériau thermométrique au fond des tranchées). Après élimination du contre-masque (7) de la région destinée à l'absorption du rayonnement, un dernier niveau de masquage définit l'absorbeur (3) et les bras d'isolation thermique et de maintien du détecteur (8). La forme des bras d'isolation au niveau supérieur et inférieur est donnée à titre indicatif à la figure 2. Il peut s'agir par exemple de deux spirales imbriquées (Fig. 2B).

La figure 3 illustre de manière explicite le détecteur conforme à l'invention. Fondamentalement, celui-ci se caractérise par l'extension du matériau bolométrique (2) selon un plan perpendiculaire au substrat, et donc, son absence d'exposition directe au rayonnement incident à détecter.

Ledit matériau bolométrique est maintenu suspendu au dessus du substrat au moins par l'intermédiaire de l'absorbeur (3), qui s'étend parallèlement au substrat, et donc peut pleinement recevoir le rayonnement incident à détecter, et ainsi transmettre la quantité de chaleur collectée au matériau bolométrique.

Dans le cadre de la mise en oeuvre d'un détecteur thermique selon l'invention dans un dispositif de détection infrarouge de type bolométrique, l'utilisation d'un bolomètre de compensation ou de référence, également appelé résistance d'ébasage, s'avère avantageuse.

Afin d'augmenter la sensibilité de la lecture, il est en effet utile de dériver la fraction invariante du courant dans une branche dite «d'ébasage» du circuit, pour n'envoyer que la partie variable du courant vers l'intégrateur.

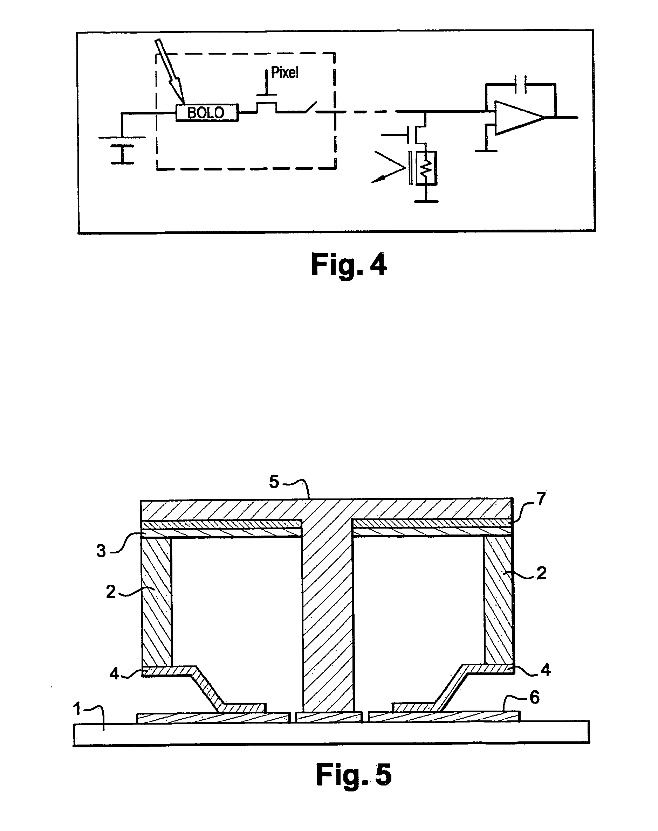

Il s'agit de mesurer la valeur de la résistance du matériau thermométrique, représentée par la résistance BOLO dans la figure 4. Parmi les nombreuses façons de la mesurer, la lecture en courant est fréquemment utilisée.

Le dispositif faisant fonction d'ébasage doit être faiblement générateur de bruit. Pour cela, l'ébasage est réalisé par l'intermédiaire d'une résistance suffisamment élevée, polarisée en injection directe.

Une solution classique consiste à utiliser comme résistance d'ébasage un détecteur thermique constitué du même matériau sensible (2) que le détecteur thermique actif, préférentiellement thermalisé à la température du plan focal, mais incapable de détection.

Généralement, ces éléments sont situés en bout de ligne ou de colonne pour gagner de la place. Lorsque la température du plan focal fluctue, les résistances d'ébasage régulent également ces effets, puisqu'ils évoluent avec la température de manière identique à celle des détecteurs actifs.

L'efficacité de la fonction d'ébasage est directement liée aux caractéristiques des résistances d'ébasage. Celles-ci doivent d'une part présenter une résistance thermique minimum afin de suivre le plus rapidement possible la température du plan focal (thermalisation) et d'autre part, se révéler réellement aveugles dans les situations d'éblouissement, c'est à dire de très fort flux lumineux, plaçant alors le circuit électronique en état de saturation.

L'objet de l'invention porte également sur l'amélioration de ces deux caractéristiques. En effet, dans la figure 5, la tête du pilier (5) s'étend à la totalité de la surface du pixel (3), assurant ainsi une réflexion totale du rayonnement infrarouge et une thermalisation optimale par l'intermédiaire des couches métalliques épaisses constituant le pilier (5).

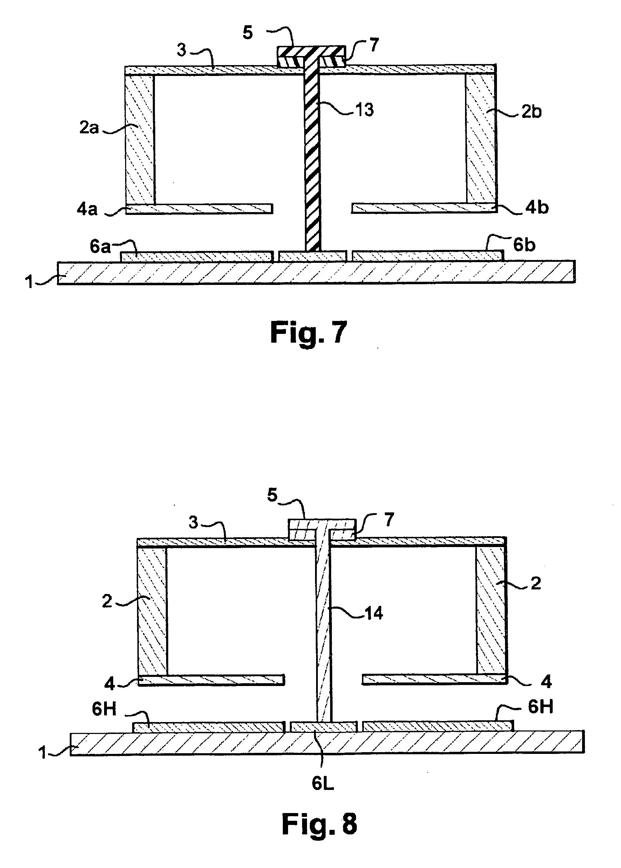

Dans un mode de réalisation alternatif illustré aux figures 7 et 8, les connexions mécaniques et électriques inférieures sont supprimées, de manière à accroître sensiblement la résistance thermique du détecteur.

Selon cette forme particulière de réalisation de l'invention, la lecture de la valeur de la résistance thermométrique est assurée par couplage capacitif de l'électrode inférieure (4) du bolomètre avec une électrode située sur le circuit de lecture (1).

L'absorbeur (3) est suspendu au-dessus du substrat (1) par un moyen de fixation (5), avantageusement sous la forme d'un pilier central (13, 14), relié mécaniquement au substrat (1).

Selon une première variante (figure 7), le pilier (13) est isolant électrique. Le matériau bolométrique (2), ainsi que les électrodes (4), sont alors constituées de deux parties isolées électriquement, respectivement (2a, 2b) et (4a, 4b).

La liaison capacitive conforme à l'invention s'établit entre les électrodes (4a, 4b) solidarisées au niveau de la tranche inférieure du matériau bolométrique (2) et une couche métallique (6) élaborée sur le substrat, qui sert à la fois de réflecteur du rayonnement infrarouge incident, et de connexion électrique du bolomètre.

La lecture de la valeur de la résistance thermométrique est donc assurée par couplage capacitif des électrodes inférieures (4a, 4b) du micro-bolomètre (2) avec l'électrode (6) située sur le substrat ou le circuit de lecture (1). Le courant en provenance de l'électrode (4a), après avoir traversé la résistance bolométrique (2a) parcourt l'électrode supérieure (3), puis la seconde partie (2b) du bolomètre jusqu'à la seconde partie (4b) de l'électrode inférieure. Par couplage capacitif entre l'électrode (4a) et l'électrode (6a) d'une part, et entre l'électrode (4b) et l'électrode (6b) d'autre part, on peut déterminer la lecture entre les électrodes (6a) et (6b).

Les électrodes (6a) et (6b) constituent donc, dans cette forme de réalisation, les points H et L du circuit électrique du détecteur, entre lesquels est mesurée ou lue la variation de tension précitée.

Selon la variante de la figure 8, le pilier (14) est conducteur électrique. Le matériau sensible est alors continu et ne constitue donc plus qu'une seule partie. Corollairement, l'électrode (6) est également unique.

Le courant électrique en provenance de l'électrode (4), après avoir traversé le matériau bolométrique (2), traverse l'électrode supérieure (3) puis redescend par le pilier (14) jusqu'au pied (6L) solidarisé au substrat (1). Le couplage capacitif intervient entre l'électrode (4) et l'électrode (6H), également unique. Il est mesuré entre les points H et L.

Cette solution présente un avantage évident et décisif en termes de prévention des fuites thermiques et de polarisation optimisée par rapport aux détecteurs de l'art antérieur. Ce faisant, les performances du dispositif de détection mettant en oeuvre de tels détecteurs sont singulièrement améliorés.

Dans cette configuration, le bolomètre de référence à mettre en oeuvre est élaboré selon le même principe que celui de la résistance d'ébasage illustré en relation avec la figure 5.

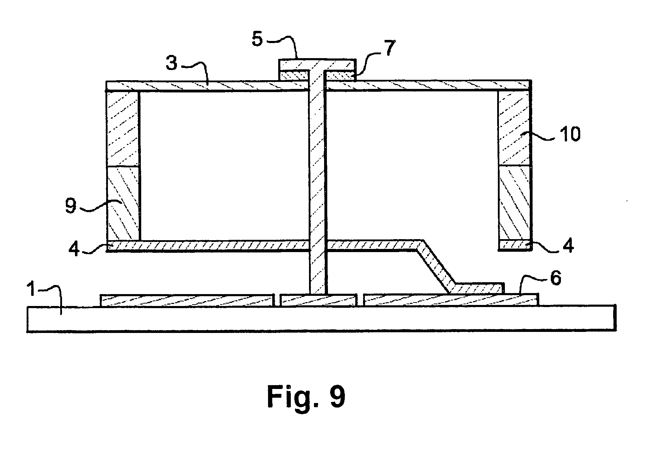

Selon l'invention, une diode ou jonction p/n ou n/p (9, 10) fonctionnant en direct peut également convenir pour une application de détection thermique, comme illustré à la figure 9. Cette jonction peut être réalisée en inversant par exemple le type du matériau déposé par implantation ionique ou une diffusion d'un dopant sur une profondeur convenable.

La configuration dite « verticale » de l'invention se prête à la réalisation de détecteur performant, en limitant l'excès de bruit apporté par la résistance série du détecteur qui, dans cette configuration, est extrêmement réduite.

Le détecteur d'ébasage à jonction verticale correspondant est élaboré selon le principe décrit à la figure 5. Il est constitué des régions de type p et n. Cette option peut éventuellement être couplée avec la liaison capacitive, précédemment décrite et illustrée aux figures 7 et 8.

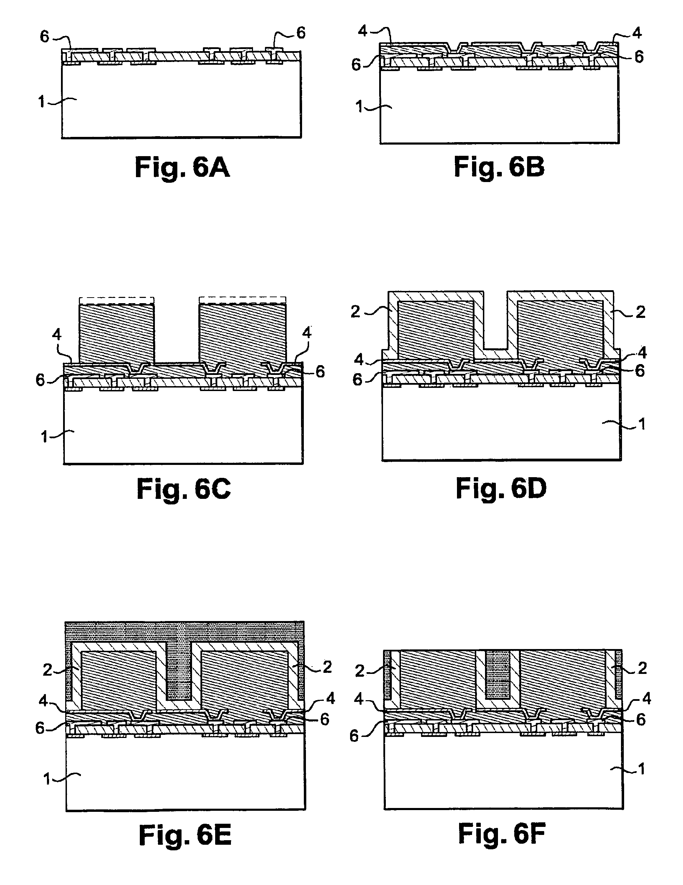

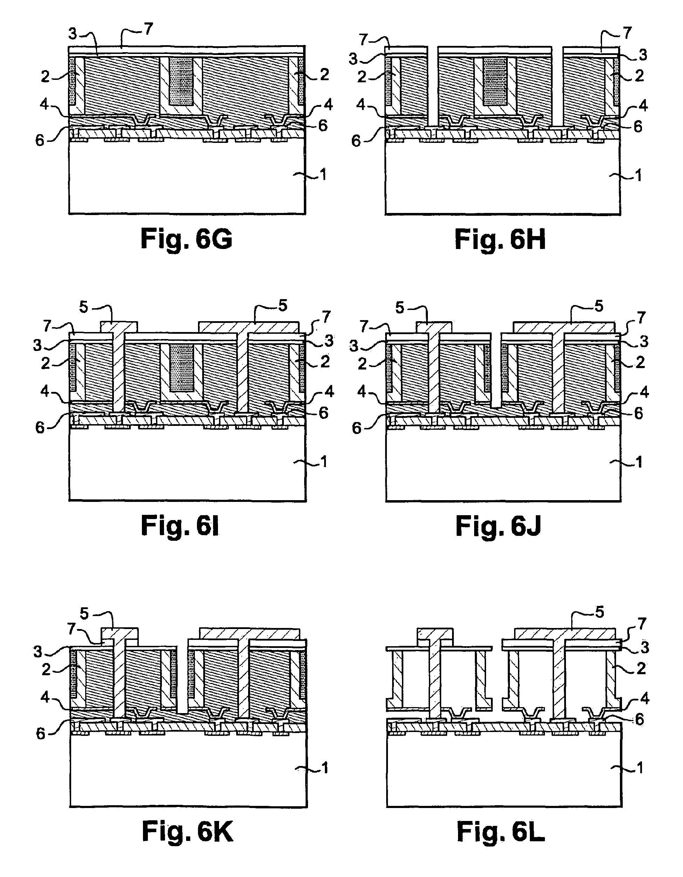

On a représenté en relation avec la figure 6 un exemple des différentes étapes entrant dans la fabrication d'un dispositif de détection infrarouge de type bolométrique intégrant un bolomètre et une résistance d'ébasage conformes à l'invention, et dans lequel le circuit de détection bolométrique est constitué de bolomètres sensibles et de résistances d'ébasage élaborés sur un substrat ou un circuit CMOS (1).
- Figure 6A:: Dépôt et gravure d'une couche métallique (6), destinée à assurer les fonctions de réflecteur et d'éléments de connectique.
- Figure 6B:: Couchage d'une couche sacrificielle de 0,2 à 0,5 µm d'épaisseur (polyimide) sur le réflecteur (6), puis ouverture de celle-ci afin d'établir le contact avec des électrodes inférieures (4) du bolomètre avec le substrat (1). Ensuite, dépôt et gravure de l'électrode inférieure (4), dont une partie sert également de structure de connexion et de maintien des bolomètres.
- Figure 6C:: Couchage d'une couche sacrificielle de 2 µm à 2,3 µm d'épaisseur. Gravure de tranchées verticales dans la couche sacrificielle (polyimide). L'électrode inférieure (4) sert de couche d'arrêt à la gravure de la couche sacrificielle. Afin de maîtriser le profil de gravure, un contre- masque peut s'avérer nécessaire. Il est ôté avant le dépôt du film suivant.
- Figure 6D:: Dépôt du matériau thermométrique bolométrique (2). Le dépôt doit présenter une bonne couverture de marche. Il est préférentiellement réalisé par un procédé chimique, et par exemple, en PECVD.
- Figure 6E :: Couchage d'une couche organique (résine ou polyimide) préparatoire au polissage mécano-chimique.
- Figure 6F :: Polissage mécano-chimique de la surface parallèle au substrat (1) du matériau thermomètre (2).
- Figure 6G :: Dépôt d'une couche de TiN (30 à 100 Å) constituant l'électrode supérieure (3) et d'un contre-masque en aluminium (7).
- Figure 6H:: Gravure de l'ouverture de contact dans la couche sacrificielle.
- Figure 6I:: Dépôt de la gravure de la métallisation (Ti, TiN, WSi) (5) assurant la connexion de l'électrode supérieure (3) avec le substrat (1).
- Figure 6J :: Réticulation des détecteurs en utilisant le contre-masque en aluminium (7).
- Figure 6K :: Gravure du contre-masque (7) sur les détecteurs actifs, puis définition sur ceux-ci de l'électrode supérieure qui sert également d'absorbeur (3).
- Figure 6L :: Libération des détecteurs actifs et des résistances d'ébasage par gravure des couches sacrificielles.

Préférentiellement, le détecteur de l'invention comprend une architecture matricielle, afin de réaliser de l'imagerie infrarouge.

L'utilisation de microstructures en couche mince permet de réaliser une isolation thermique efficace de la matrice de détecteurs, par rapport au circuit de lecture (1). Par exemple, ces microstructures peuvent être élaborées suivant différents procédés qui conduisent à la fabrication de microponts.

Le thermomètre est réalisé en couche mince (0.005 µm à 1 µm) de matériau semi-conducteur amorphe ou polycristallin (Si, Ge, SiC, a-Si :H, a-SiC :H, a-SiGe :H, Ferrite, oxydes de Vanadium,...). Ces couches sont obtenues à l'aide des techniques de dépôt basse température, habituellement utilisées pour ces matériaux: pulvérisation cathodique, décomposition thermique (LPCVD) ou plasma (PECVD).

Le dopage éventuel de ces couches est réalisé en introduisant un gaz dopant (BF3, PH3, ...) dans le réacteur ou bien par implantation ionique. La gravure de ces matériaux est généralement réalisée par des procédés d'attaque chimique assistée par plasma.

Les matériaux métalliques (Ti, TiN, Pt, Al, Pd, Ni, NiCr, ...) constituant les électrodes et les diverses métallisations, sont également déposées par pulvérisation cathodique, ou par décomposition thermique (LPCVD) ou plasma (PECVD). Ces métallisations sont définies par des procédés de gravure chimique, plasma ou par un procédé de « lift off ». L'épaisseur de ces couches est comprise entre 0,005 µm et 1 µm.

La solution préconisée par l'invention présente un certain nombre d'avantages par rapport aux détecteurs de l'art antérieur.

On peut tout d'abord mentionner l'optimisation de l'absorption optique et de l'isolation thermique de ces détecteurs, inhérente à la libération de la surface effective de détection, notamment au seul profit de l'absorbeur.

On peut également citer la possibilité d'améliorer la résolution optique, de par la diminution possible du pas de localisation desdits détecteurs, c'est-à-dire du pas des matrices de détection les mettant en oeuvre, et corollairement de l'augmentation du facteur de remplissage, en raison de l'architecture particulière proposée, notamment des éléments dimensionnels des bras d'isolation thermique, positionnés selon deux niveaux différents.

On peut noter enfin l'optimisation du détecteur conforme à l'invention en termes de masse thermique, puisque la totalité du matériau thermomètre est active, grâce au contact réalisé sur la tranche de ce dernier.

## Revendications

1. Détecteur thermique d'un rayonnement électromagnétique, comprenant :
• un matériau sensible (2), dont une propriété électrique varie avec la température ;
• un absorbeur (3) du rayonnement électromagnétique en contact avec ledit matériau sensible (2) ;
• un substrat (1) assurant la fonction de support (1);
• des éléments conducteurs de l'électricité assurant la continuité électrique entre le matériau sensible (2) et le substrat (1) ;
***caractérisé :***
- **en ce que** le matériau sensible (2) se présente en tout ou en partie sous la forme d'une tranche s'étendant selon une direction sensiblement perpendiculaire au plan dans lequel s'inscrit le substrat (1) ;
- **en ce que** ledit matériau sensible (2) est maintenu suspendu par l'absorbeur (3) au-dessus du substrat (1), ledit absorbeur (3) étant solidarisé au matériau sensible (2) au niveau de la zone supérieure de la tranche, ladite zone étant contenue dans un plan parallèle au plan dans lequel s'inscrit le susbtrat ;
- et **en ce que** l'absorbeur (3) est lui-même suspendu par un moyen de fixation (5), relié mécaniquement audit substrat (1).

2. Détecteur thermique d'un rayonnement électromagnétique selon la revendication 1, ***caractérisé* en ce que** le matériau sensible (2) présente une résistivité qui varie avec la température, et est constitué d'un matériau bolomètrique.

3. Détecteur thermique d'un rayonnement électromagnétique selon la revendication 2, ***caractérisé* en ce que** le matériau sensible (2) est constitué d'un matériau semi-conducteur choisi dans le groupe comprenant le silicium polycristallin ou amorphe de type p ou n, le germanium polycristallin ou amorphe de type p ou n, leurs alliages, les oxydes de vanadium et les ferrites.

4. Détecteur thermique d'un rayonnement électromagnétique selon l'une des revendications précédentes, ***caractérisé* en ce que** l'absorbeur (3) se présente sous la forme d'une couche, située dans un plan sensiblement parallèle à celui du substrat (1).

5. Détecteur thermique d'un rayonnement électromagnétique selon l'une des revendications précédentes, ***caractérisé* en ce que** le matériau sensible (2) présente une surface cylindrique continue ou discontinue.

6. Détecteur thermique d'un rayonnement électromagnétique selon la revendication 5, ***caractérisé* en ce que** la base de la surface cylindrique constitutive du matériau sensible (2) est de forme carrée, rectangulaire, circulaire ou hexagonale.

7. Détecteur thermique d'un rayonnement électromagnétique selon l'une des revendications précédentes, ***caractérisé* en ce qu'**il comprend une couche (6), réfléchissante dudit rayonnement électromagnétique et conductrice électriquement, située dans un plan sensiblement parallèle à l'absorbeur (3).

8. Détecteur thermique d'un rayonnement électromagnétique selon l'une des revendications précédentes, ***caractérisé* en ce qu'**il comprend des électrodes inférieures (4) en contact avec le matériau sensible (2), et **en ce que** la continuité électrique entre le substrat (1) ou la couche réfléchissante (6) et lesdites électrodes inférieures est assurée au moyen de connexions mécaniques ou électriques.

9. Détecteur thermique d'un rayonnement électromagnétique selon l'une des revendications précédentes, ***caractérisé* en ce que** le moyen de fixation (5) est constitué par un pilier conducteur électrique disposé perpendiculairement au plan dans lequel s'inscrit le substrat (1), la tête du pilier étant en continuité électrique avec l'absorbeur (3).

10. Détecteur thermique d'un rayonnement électromagnétique selon l'une des revendications 1 à 7, ***caractérisé* en ce qu'**il comprend des électrodes inférieures (4) en contact avec le matériau sensible (2), et **en ce que** la conduction électrique entre lesdites électrodes inférieures (4) et le substrat (1) ou la couche réfléchissante (6), est assurée par couplage capacitif.

11. Détecteur thermique d'un rayonnement électromagnétique selon la revendication 10, ***caractérisé :***
• **en ce que** le matériau sensible (2) se présente sous la forme d'une tranche continue s'étendant selon une direction sensiblement perpendiculaire au plan dans lequel s'inscrit le substrat (1);
• **en ce que** ledit matériau sensible (2) est maintenu suspendu par l'absorbeur (3) au-dessus du substrat (1), ledit absorbeur (3) étant solidarisé au matériau sensible (2) au niveau de la zone supérieure de la tranche constitutive du matériau sensible (2) ;
• **en ce que** l'absorbeur (3) est lui-même suspendu par un moyen de fixation (5, 14) électriquement conducteur, relié mécaniquement et électriquement audit substrat (1);
• et **en ce que** le couplage capacitif est assuré entre un élément conducteur (4) solidarisé au matériau sensible (2) au niveau de la zone inférieure de la tranche et un élément conducteur (6) se présentant sous la forme d'une couche métallique conductrice, positionnée sur le substrat (1).

12. Détecteur thermique d'un rayonnement électromagnétique selon la revendication 10, ***caractérisé :***
• **en ce que** le matériau sensible (2) se présente sous la forme d'une tranche constituées de deux parties (2a, 2b) isolées électriquement l'une de l'autre, et s'étendant selon une direction sensiblement perpendiculaire au plan dans lequel s'inscrit le substrat (1);
• **en ce que** ledit matériau sensible (2a, 2b) est maintenu suspendu par l'absorbeur (3) au-dessus du substrat (1), ledit absorbeur (3) étant solidarisé au matériau sensible (2) au niveau de la zone supérieure de la tranche constitutive du matériau sensible (2);
• **en ce que** l'absorbeur (3) est lui-même suspendu par un moyen de fixation (5, 13) électriquement isolant, relié mécaniquement audit substrat (1);
• et **en ce que** le couplage capacitif est assuré entre deux éléments conducteurs (4a, 4b), solidarisés respectivement au matériau sensible (2) au niveau de la zone inférieure de chacune des deux parties (2a, 2b) le constituant, et deux éléments conducteurs (6a, 6b) se présentant chacun sous la forme d'une couche métallique conductrice, positionnée sur le substrat.

13. Détecteur thermique d'un rayonnement électromagnétique selon l'une des revendications 1 à 12 ***caractérisé* en ce que** le détecteur est constitué par une jonction p/n.

14. Dispositif de détection d'un rayonnement infrarouge, ***caractérisé* en ce qu'**il met en oeuvre au moins un détecteur thermique selon l'une des revendications 1 à 13.

15. Dispositif de détection d'un rayonnement infrarouge selon la revendication *14,* ***caractérisé* en ce qu'**il présente une structure matricielle comportant au moins deux détecteurs thermiques.

16. Dispositif de détection d'un rayonnement infrarouge selon la revendication 15, ***caractérisé* en ce qu'**il associe :
- au moins un détecteur thermique actif, tel que défini à l'une des revendications 1 à 13 ; et
- un détecteur thermique dit de référence, semblable au détecteur actif mais dépourvu de la capacité à détecter les rayonnements électromagnétiques.

17. Dispositif de détection d'un rayonnement infrarouge selon la revendication 16, ***caractérisé* en ce que** l'incapacité du détecteur dit de référence à détecter les rayonnements électromagnétiques est assurée par le fait que la tête du pilier constituant le moyen de fixation (5) recouvre entièrement la surface de l'absorbeur (3).

## Claims

1. A thermal detector for electromagnetic radiation comprising:
• a sensitive material (2), one electrical property of which varies with temperature;
• an electromagnetic radiation absorber (3) which is in contact with said sensitive material (2);
• a substrate (1) providing the function of support (1);
• electrically conductive elements providing electrical continuity between sensitive material (2) and substrate (1);
***characterised:***
- **in that** sensitive material (2) is wholly or partly in the form of a sheet extending in a direction which is substantially perpendicular to the plane that bounds the substrate (1);
- **in that** said sensitive material (2) is suspended by absorber (3) above the substrate (1), said absorber (3) being fixed to sensitive material (2) in the upper region of the sheet, said region being contained in a plane which is parallel to the plane that bounds the substrate ;
- and **in that** absorber (3) is itself suspended by fixing means (5) which is mechanically connected to said substrate (1).

2. A thermal detector for electromagnetic radiation as claimed in claim 1, ***characterised* in that** the sensitive material (2) has resistivity which varies with temperature and consists of a bolometric material.

3. A thermal detector for electromagnetic radiation as claimed in claim 2, ***characterised* in that** the sensitive material (2) consists of a semiconductor material chosen from the group comprising p- or n-type polycrystalline or amorphous silicon, p- or n-type polycrystalline or amorphous germanium, alloys thereof, vanadium oxides and ferrites.

4. A thermal detector for electromagnetic radiation as claimed in any of the above claims, ***characterised* in that** absorber (3) is in the form of a layer located in a plane substantially parallel to that of substrate (1).

5. A thermal detector for electromagnetic radiation as claimed in any of the above claims, ***characterised* in that** sensitive material (2) has a continuous or discontinuous cylindrical surface.

6. A thermal detector for electromagnetic radiation as claimed in claim 5, ***characterised* in that** the base of the cylindrical surface of sensitive material (2) has a square, rectangular, circular or hexagonal shape.

7. A thermal detector for electromagnetic radiation as claimed in any of the above claims, ***characterised* in that** it comprises a layer (6) which reflects said electromagnetic radiation, is electrically conductive and is located in a plane substantially parallel to absorber (3).

8. A thermal detector for electromagnetic radiation as claimed in any of the above claims, ***characterised* in that** it comprises lower electrodes being in contact with the sensitive material contact between lower electrodes (4) which are in contact with sensitive material (2), and **in that** the electrical continuity between the substrate (1) or the reflective layer (6) and said electrodes is ensured by means of mechanical or electrical connections.

9. A thermal detector for electromagnetic radiation as claimed in any of the above claims, ***characterised* in that** the fixing means (5) consists of consists of an electrically conductive post arranged at right angles relative to the plane which bounds substrate (1), there being electrical continuity between the top of the post and the absorber (3).

10. A thermal detector for electromagnetic radiation as claimed in any of claims 1 to 7, ***characterised* in that** it comprises lower electrodes (4) being in contact with the sensitive material, and **in that** electric conduction between lower electrodes (4) and the substrate (1) or reflective layer (6) is ensured by capacitive coupling.

11. A thermal detector for electromagnetic radiation as claimed in claim 10, ***characterised:***
• **in that** the sensitive material (2) is in the form of a continuous sheet extending in a direction which is substantially perpendicular to the plane that bounds substrate (1);
• **in that** said sensitive material (2) is suspended by absorber (3) above substrate (1), said absorber (3) being fixed to sensitive material (2) in the upper region of the sheet that constitutes sensitive material (2);
• **in that** the absorber (3) is itself suspended by fixing means (5, 14) which is electrically conductive and mechanically and electrically connected to said substrate (1);
• and **in that** capacitive coupling is ensured between a conductive part (4) attached to sensitive material (2) in the lower area of the sheet and a conductive part (6) in the form of a conductive metallic layer located on substrate (1).

12. A thermal detector for electromagnetic radiation as claimed in claim 10, ***characterised:***
• **in that** the sensitive material (2) is in the form of a sheet consisting of two parts (2a, 2b) which are electrically insulated from other and extend in a direction which is substantially perpendicular to the plane that bounds substrate (1);
• **in that** said sensitive material (2a, 2b) is suspended by absorber (3) above substrate (1), said absorber (3) being fixed to sensitive material (2) in the upper region of the sheet that constitutes sensitive material (2);
• **in that** the absorber (3) is itself suspended by fixing means (5, 13) which is electrically insulating and mechanically connected to said substrate (1);
• and **in that** capacitive coupling is ensured between two conductive parts (4a, 4b) which are attached respectively to sensitive material (2) in the lower area of each of the two parts (2a, 2b) which constitute it, and two conductive parts (6a, 6b) each in the form of a conductive metallic layer located on the substrate.

13. A thermal detector for electromagnetic radiation as claimed in any of claims 1 to 12, ***characterised* in that** the detector consists of a p/n junction.

14. A device for detecting infrared radiation ***characterised* in that** it uses a least one thermal detector as claimed in any of claims 1 to 13.

15. A device for detecting infrared radiation as claimed in claim 14, ***characterised* in that** it has an array structure comprising at least two thermal detectors.

16. A device for detecting infrared radiation as claimed in claim 15, ***characterised* in that** it associates:
- at least one active thermal detector as defined by any of claims 1 to 13; and
- a so-called reference thermal detector identical to the active detector, but without the ability to detect electromagnetic radiation.

17. A device for detecting infrared radiation as claimed in claim 16, ***characterised* in that** the inability of the so-called reference detector to detect electromagnetic radiation is ensured by the fact that the top of the post that constitutes fixing means (5) entirely covers the surface of absorber (3).

## Patentansprüche

1. Thermodetektor für eine elektromagnetische Strahlung, Folgendes aufweisend:
• ein sensitives Material (2), von dem sich eine elektrische Eigenschaft mit der Temperatur verändert;
• einen Absorber (3) für elektromagnetische Strahlung, der mit dem sensitiven Material (2) in Kontakt ist;
• ein Substrat (1), das die Funktion eines Trägers (1) sicherstellt;
• für Elektrizität leitfähige Elemente, welche die elektrische Durchgängigkeit zwischen dem sensitiven Material (2) und dem Substrat (1) sicherstellen;
**dadurch gekennzeichnet:**
- **dass** sich das sensitive Material (2) ganz oder teilweise in Form eines Teilabschnitts darstellt, das sich entlang einer Richtung erstreckt, die im Wesentlichen senkrecht zu der Ebene ist, in der das Substrat (1) liegt;
- **dass** das sensitive Material (2) durch den Absorber (3) über dem Substrat aufgehängt gehalten ist, wobei der Absorber (3) im Bereich der oberen Zone des Teilabschnitts mit dem sensitiven Material (2) verbunden ist, wobei der Bereich in einer Ebene enthalten ist, die parallel zu der Ebene ist, in der das Substrat liegt;
- und **dass** der Absorber (3) selbst mittels einer mechanisch mit dem Substrat (1) verbundenen Befestigungseinrichtung (5) aufgehängt ist.

2. Thermodetektor für eine elektromagnetische Strahlung nach Anspruch 1, **dadurch gekennzeichnet, dass** das sensitive Material (2) einen spezifischen Widerstand aufweist, der sich mit der Temperatur verändert, und aus einem bolometrischen Material besteht.

3. Thermodetektor für eine elektromagnetische Strahlung nach Anspruch 2, **dadurch gekennzeichnet, dass** das sensitive Material (2) aus einem Halbleitermaterial besteht, das aus der Gruppe ausgewählt ist, die polykristallines oder amorphes Silizium des Typs p oder n, polykristallines oder amorphes Germanium des Typs p oder n, deren Legierungen, Vanadiumoxide und Ferrite umfasst.

4. Thermodetektor für eine elektromagnetische Strahlung nach einem der vorhergehenden Ansprüche, **dadurch gekennzeichnet, dass** sich der Absorber (3) in Form einer Schicht darstellt, die sich in einer Ebene befindet, die im Wesentlichen parallel zu derjenigen des Substrats (1) ist.

5. Thermodetektor für eine elektromagnetische Strahlung nach einem der vorhergehenden Ansprüche, **dadurch gekennzeichnet, dass** das sensitive Material (2) eine durchgehende oder unterbrochene Zylinderfläche aufweist.

6. Thermodetektor für eine elektromagnetische Strahlung nach Anspruch 5, **dadurch gekennzeichnet, dass** die Basis der aus sensitivem Material (2) bestehenden Zylinderfläche eine quadratische, rechteckige, kreisförmige oder hexagonale Form hat.

7. Thermodetektor für eine elektromagnetische Strahlung nach einem der vorhergehenden Ansprüche, **dadurch gekennzeichnet, dass** er eine die elektromagnetische Strahlung reflektierende und elektrisch leitfähige Schicht (6) umfasst, die sich in einer Ebene befindet, die im Wesentlichen parallel zum Absorber (3) ist.

8. Thermodetektor für eine elektromagnetische Strahlung nach einem der vorhergehenden Ansprüche, **dadurch gekennzeichnet, dass** er untere Elektroden (4) umfasst, die mit dem sensitiven Material (2) in Kontakt sind, und dass die elektrische Durchgängigkeit zwischen dem Substrat (1) oder der reflektierenden Schicht (6) und den unteren Elektroden mittels mechanischer oder elektrischer Verbindungen sichergestellt ist.

9. Thermodetektor für eine elektromagnetische Strahlung nach einem der vorhergehenden Ansprüche, **dadurch gekennzeichnet, dass** die Befestigungseinrichtung (5) aus einem elektrisch leitfähigen Pfeiler besteht, der senkrecht zu der Ebene angeordnet ist, in der das Substrat (1) liegt, wobei das Kopfstück des Pfeilers in elektrischer Durchgängigkeit mit dem Absorber (3) steht.

10. Thermodetektor für eine elektromagnetische Strahlung nach einem der Ansprüche 1 bis 7, **dadurch gekennzeichnet, dass** er untere Elektroden (4) umfasst, die mit dem sensitiven Material (2) in Kontakt sind, und dass die elektrische Leitung zwischen den unteren Elektroden (4) und dem Substrat (1) oder der reflektierenden Schicht (6) durch kapazitive Kopplung sichergestellt ist.

11. Thermodetektor für eine elektromagnetische Strahlung nach Anspruch 10, **dadurch gekennzeichnet:**
• **dass** sich das sensitive Material (2) in Form eines durchgehenden Teilabschnitts darstellt, das sich entlang einer Richtung erstreckt, die im Wesentlichen senkrecht zu der Ebene ist, in der das Substrat (1) liegt;
• **dass** das sensitive Material (2) durch den Absorber (3) über dem Substrat (1) aufgehängt gehalten ist, wobei der Absorber (3) im Bereich der oberen Zone des aus dem sensitiven Material (2) bestehenden Teilabschnitts mit dem sensitiven Material (2) verbunden ist;
• **dass** der Absorber (3) selbst mittels einer mechanisch und elektrisch mit dem Substrat (1) verbundenen, elektrisch leitfähigen Befestigungseinrichtung (5, 14) aufgehängt ist;
• und **dass** die kapazitive Kopplung zwischen einem Leiterelement (4), das mit dem sensitiven Material (2) im Bereich der unteren Zone des Teilabschnitts verbunden ist, und einem Leiterelement (6) sichergestellt ist, das sich in Form einer auf dem Substrat (1) angeordneten leitfähigen Metallschicht darstellt.

12. Thermodetektor für eine elektromagnetische Strahlung nach Anspruch 10, **dadurch gekennzeichnet:**
• **dass** sich das sensitive Material (2) in Form eines Teilabschnitts darstellt, das aus zwei, elektrisch voneinander isolierten Teilen (2a, 2b) besteht, und sich entlang einer Richtung erstreckt, die im Wesentlichen senkrecht zu der Ebene ist, in der das Substrat (1) liegt;
• **dass** das sensitive Material (2) durch den Absorber (3) über dem Substrat (1) aufgehängt gehalten ist, wobei der Absorber (3) im Bereich der oberen Zone des aus dem sensitiven Material (2) bestehenden Teilabschnitts mit dem sensitiven Material (2) verbunden ist;
• **dass** der Absorber (3) selbst mittels einer elektrisch isolierenden, mechanisch mit dem Substrat (1) verbundenen Befestigungseinrichtung (5, 13) aufgehängt ist;
• und **dass** die kapazitive Kopplung zwischen zwei Leiterelementen (4a, 4b), die jeweils im Bereich der unteren Zone jedes der beiden Teile (2a, 2b) mit dem sensitiven Material (2), aus denen sie bestehen, verbunden sind, und zwei Leiterelementen (6a, 6b) sichergestellt ist, die sich jeweils in Form einer leitfähigen, auf dem Substrat angeordneten Metallschicht darstellen.

13. Thermodetektor für eine elektromagnetische Strahlung nach einem der Ansprüche 1 bis 12, **dadurch gekennzeichnet, dass** der Detektor mittels eines p/n-Übergangs gebildet ist.

14. Vorrichtung zur Erfassung einer Infrarotstrahlung, **dadurch gekennzeichnet, dass** sie mindestens einen Thermodetektor nach einem der Ansprüche 1 bis 13 einsetzt.

15. Vorrichtung zur Erfassung einer Infrarotstrahlung nach Anspruch 14, **dadurch gekennzeichnet, dass** sie eine Matrixstruktur aufweist, die mindestens zwei Thermodetektoren umfasst.

16. Vorrichtung zur Erfassung einer Infrarotstrahlung nach Anspruch 15, **dadurch gekennzeichnet, dass** sie verbindet:
- mindestens einen, wie in einem der Ansprüche 1 bis 13 definierten, aktiven Thermodetektor; und
- einen sogenannten Referenz-Thermodetektor, der dem aktiven Detektor ähnlich ist, aber über keine Fähigkeit verfügt, elektromagnetische Strahlungen zu erfassen.

17. Vorrichtung zur Erfassung einer Infrarotstrahlung nach Anspruch 16, **dadurch gekennzeichnet, dass** die Unfähigkeit des sogenannten Referenz-Detektors, elektromagnetische Strahlungen zu erfassen, **dadurch** sichergestellt ist, dass das Kopfstück des Pfeilers, aus dem die Befestigungseinrichtung (5) besteht, die Oberfläche des Absorbers (3) vollständig abdeckt.
